# EUROPEAN PATENT SPECIFICATION

(11) **EP 2 240 747 B1**
(45) Date of publication and mention of the grant of the patent: **01.04.2015**
(21) Application number: 09708989.0
(22) Date of filing: 04.02.2009
(51) Int. Cl.: G01F 23/288, G01N 9/24

(54) **LEVEL MEASUREMENT USING AN INCLINED ARRAY OF SOURCES OF IONISING RADIATION**
PEGELMESSUNG UNTER VERWENDUNG EINES GENEIGTEN ARRAYS VON QUELLEN IONISIERENDER STRAHLUNG
MESURE DE NIVEAU UTILISANT UN RÉSEAU INCLINÉ DE SOURCES DE RAYONNEMENT IONISANT

(30) Priority: 07.02.2008 GB 0802253
(43) Date of publication of application: 20.10.2010
(73) Proprietor: Johnson Matthey PLC, London EC4A 4AB (GB)
(72) Inventor: JACKSON, Peter, Cleveland TS18 4JQ (GB); JAMES, Kenneth, Cleveland TS15 9ST (GB)
(74) Representative: Gibson, Sara Hillary Margaret
(86) International application number: PCT/GB2009/050102
(87) International publication number: WO 2009/098506

(56) References cited:
- WO-A-00/22387
- WO-A-2006/067525

## Description

The present invention concerns a level measurement system and apparatus and a method for measuring the level of a material within a vessel. More particularly the invention concerns the detection of the location of an interface between different materials contained in a vessel, in particular where the materials constitute a multiphase medium which is present in a pipeline or a vessel of relatively small cross section.

Level measurement systems, i.e. for use in measuring the level of a material within a vessel, are well known. It is also known to locate the boundaries between different materials in a vessel by measuring the density of the vessel contents at different locations to form a density profile of the vessel and contents in order to identify density changes which are indicative of boundary regions. For example, it has been proposed in WO 00/22387 to measure the density profile of a medium by providing an axially distributed array of sources of ionising radiation, e.g. ²⁴¹Am which is a source of low energy gamma radiation, to give collimated beams of said radiation and an axially distributed array of detectors disposed so that the medium under study extends between the sources and the detectors. By monitoring the radiation received by the detectors, the amount of radiation absorbed by the medium from each beam can be determined and so variations in the medium density can be detected. It is an object of the present invention to provide an improved apparatus method and system for the determination of levels within a vessel. In the arrangement proposed in WO 00/22387, the resolution of the apparatus is determined by the distance between adjacent sources and detectors. When the vessel is relatively large and the depth of each of the material phases it contains exceeds the distance between the adjacent sources and and/or adjacent detectors, then the resolution of the apparatus is usually sufficient to determine the location of the interfaces to the precision required. If, however, the vessel is small or the depth of the phases is small relative to the distance between the adjacent sources or adjacent detectors, then the interfaces may not be adequately detected.

It is an object of the present invention to provide an improved method of level measurement that overcomes some of the problems of the prior art.

According to the invention a method of determining the location of a substantially horizontal fluid interface within a vessel, comprising
(i) providing a generally linear source array comprising a plurality of sources of penetrating radiation and
(ii) providing a generally linear detector array comprising a plurality of radiation detectors capable of detecting radiation emitted by the sources, said source and detector arrays being located such that radiation emitted from each of the sources is capable of following a linear path from the source, through the vessel and material to at least a respective one of the detectors,
(iii) comparing the amount of radiation received by at least two of the detectors from a respective source to provide an indication of the relative density of the material through which radiation has passed to the detectors,
the method being characterised in that the linear axis of the source and detector array is oriented with respect to the horizontal interface such that the linear axis intersects the plane of the interface at an angle between 10 degrees and 80 degrees.

The invention further comprises an apparatus for the determination of the location of a substantially horizontal fluid interface within a vessel, comprising
(i) at least one generally linear source array comprising a plurality of sources of penetrating radiation and
(ii) at least one generally linear detector array comprising a plurality of radiation detectors capable of detecting radiation emitted by the sources, and
(iii) means to position the source and a respective detector array such that
   (a) radiation emitted from each of the sources is capable of following a linear path from the source, through the vessel and material to at least a respective one of the detectors forming a part of the respective detector array,
      and
   (b) the linear axis of the source array and the linear axis of its respectve detector array are substantially parallel to each other and are oriented with respect to the horizontal interface such that both linear axes intersect the plane of the interface at a common angle between 10 degrees and 80 degrees;
(iv) means for analysing the detector output signals to determine the density of the medium traversed by the beams of radiation in passing from a source to a detector.

By "substantially horizontal interface", we mean that the phases are disposed within the vessel in such a way that at least some phase separation has occurred and that they have separated by gravity into separate phases. In this case, the interface between adjacent phases is horizontal except where turbulence or agitation induced by flow of the materials or by other means disturbs the interface. Such disturbance may be localised and may be present for the duration of the turbulent flow or agitation.

By "generally linear array" we mean that the source and detector arrays each comprise a plurality of sources or detectors arranged along an axis. One or more of the sources and/or detectors may be displaced transversely from the axis of the array. In a preferred embodiment, the array of sources comprises a plurality of sources arranged in a straight line and the array of detectors comprises a plurality of detectors arranged in a straight line.

By "substantially parallel to each other" we mean that the linear axes of the source array and the detector array are aligned such that they are parallel or nearly parallel within normal tolerances, e.g. such that the angle between the linear axes is at most 5 degrees.

By "vessel" we mean to include vessels, tubes and pipelines which are suitable for containing or constraining fluid materials. The invention is particularly suitable for use in determining the level of fluids within a pipeline. The flow of multiphase fluids along a pipeline may induce phase separation and indeed may be used in order to perform at least a partial separation of fluids recovered from a process such as an oil and/or gas recovery process. It is undesirable to introduce measurement equipment into a pipeline because it can obstruct flow and make the use of pigs and other tools within the pipeline difficult. In such a case, the apparatus including the source and detector arrays is located outside the pipeline.

In a density profiler of the type described in WO 00/22387, the vertical resolution is determined primarily by the vertical separation of the sources and detectors. This is dependent on the sizes of the sources and detectors and the precision of collimation of the radiation beams. Generally, the size of the detectors, and thus the ability to space them apart represents the main limit on the resolution. In the method and apparatus of the present invention, the resolution is also affected by the angle at which a linear array of sources or detectors is placed with respect to the horizontal interface to be located. In the prior art profiling apparatus a resolution of down to about 30mm is achievable. Using the present apparatus and method it is possible to achieve a resolution of about 10mm when the angle of the linear axis of the source and/or detector arrays is about 20 degrees from horizontal.

The invention is particularly applicable to density profile measurement in storage and separation vessels and pipelines used in the oil recovery industry where, typically, there are at least three phases present: oil, gas and an aqueous phase (sometimes brine) and often in effect a fourth phase of sand or relatively high molecular weight and density bituminous hydrocarbons commonly called asphaltines which can form a sludge at the bottom of the separator. In normal use, the density profiler will be arranged to traverse all of the main fluid phases. In addition to the single fluid phases, it is often the case that at the aqueous/oil inter-phase boundary, emulsions - either water in oil or oil in water - are frequently formed (or incompletely separate), and at the gas/oil inter-phase boundary, foams may be formed. Using the density profiler of the invention, it is practical both to locate the inter-phase boundary regions and to estimate the thickness of any inter-phase emulsion or foam. Clearly, the ability to determine the extent of any inter-phase emulsion or foam depends on the vertical resolution of the density profiler. The practical values of resolution as discussed above are adequate for realistic assessment of both the location of a phase boundary and the assessment of the thickness of inter-phase emulsion or foam. With practical detectors (see below) the density measurement when a phase boundary lies alongside a detector may be an intermediate value for the values from each phase separately. Although this may have a theoretical effect on ultimate precision, we have not found that it gives rise to a real difficulty in practice.

The number of sources and detectors used depends upon the length of the array required to cover the distance between the lowest and highest position in the vessel required to be scanned for the presence of an interface, the distance between the detectors / sources and the angle between the axis of the array and the horizontal. Normally, the source array comprises at least 3 sources of radiation, preferably less than 100. For use in determining the interfacial locations within a pipeline up to 500mm diameter, a source array may comprise from 5 - 50 sources and detectors, more preferably from 5 - 20 sources in the source array and from 10 - 40 detectors in the detector array. In a preferred embodiment at least some of the sources are collimated to provide two or more beams of radiation and in such cases the number of sources provided is less than the number of detectors.

More than one source and/or detector array may be provided. For example, a first source array and its respective first detector array may be provided to measure the level in a portion of a vessel or pipeline and a second or subsequent source and detector array may be provided to measure the level in a different portion of the vessel. Such an arrangement may be useful when the level to be determined is of fluid within a large pipeline so that shorter arrays may be deployed, making manufacturing easier.

The source and detector arrays are positioned outside the vessel walls and such that radiation emitted from each of the sources is capable of following a linear path from the source, through the vessel and material to at least a respective one of the detectors. Usually the source and detector arrays are positioned parallel to each other and the apparatus preferably includes a support means to maintain the source and detector arrays in the desired position and orientation with respect to each other and the vessel. The apparatus may be supported on a framework or similar structure to mount the apparatus in a suitable position for use with a vessel. The framework may be temporary or permanent and may be moveable, either manually or automatically. A moveable support structure may be useful for monitoring pipelines so that the apparatus may be moved along a length of pipeline. The movement may be of the apparatus relative to a support structure or of the apparatus and support structure (or a part thereof) in relation to the vessel. Movement means may include pulleys, wheels, tracks etc or a means to engage with lifting equipment so that it may be lifted into position and repositioned by lifting from the vessel and moved to a new position or vessel. The apparatus or a framework or support structure therefor may include means to engage with and disengage from a remotely operated vehicle (ROV) especially when the vessel to be monitored is located in an extreme or hostile environment such as underwater, especially sub-sea, or in a hazardous area.

The source array includes a plurality of radiation sources and collimation means to direct the radiation towards one or more of the detectors forming the detector array. The energy of the source radiation is typically not more than about 1000 keV and is desirably lower than this. Preferably the energy of the source radiation is not less than about 300 keV. The source can be a radioactive isotope as is used in conventional (single source/ detector) density gauges where the radiation source is commonly the 661 keV gamma radiation from ¹³⁷Cs. Suitable sources include ³⁷Cs, ¹³³Ba, ⁶⁰Co, especially when the level detection is to determine the level of fluid within relatively large and/or heavy-walled pipes. ²⁴¹Am is a suitable source for use with smaller diameter pipes made from thinner or less dense materials such as plastics. A variety of radiation sources is available and may be used in the level measurement system of the invention if suitable.

For a permanent installation, a radioisotope source will be chosen to have a relatively long half life both to give the equipment a satisfactory service life and to reduce the need to recalibrate to take account of reduction in source intensity from source ageing. It is usual to apply a correction to account for decay of the source over time but as the source decays the statistical accuracy of such corrections reduces so a long half life is preferred in order to maintain accurate measurement. Usually, the half life of the radioisotope used will be at least 2, and desirably at least 10, years, and not usually more than about 10000, more desirably not more than about 1000, years.

Desirably the source intensity will be at least about 4x10⁷ more usually from 4x10⁸ to 4x10⁹, Becquerel (Bq). The use of sources with lower intensity may require unduly long integration times to obtain adequately precise results (signal to noise ratio) and more intense sources are relatively expensive and/or may lead to swamping of the detectors.

Each source is preferably located in an individual holder to facilitate handling and insertion into and removal from the apparatus. The sources, in their holders, are housed in a housing which is opaque to the radiation produced by a source and has a window through which the radiation may pass. The window may be formed of a radiation transparent solid material or alternatively it may be formed by an aperture in the housing material. The housing preferably includes a collimation means, usually by shaping the housing and window to direct radiation in the form of a narrow beam or cone towards the detector. Each source may be provided with its own housing or some or all of the sources may be housed in a unitary housing which provides collimation means for each source. The housing includes shielding material to prevent, or at least substantially reduce, the exposure of the environment around the apparatus to the radiation, except between the sources and detectors. The portion of the housing facing the vessel when in use may be shaped to complement the shape of the vessel in order to provide a greater amount of shielding than if the face of the housing were flat. Preferably the housing also includes a shuttering means to shield the source so that radiation does not escape from the source housing at all. The shuttering means is operable to shutter the radiation during installation, movement and de-installation of the apparatus and may also be useful to shut off the radiation in case of an emergency or similar event. The shuttering means may comprise a sleeve of radiation-opaque material arranged to at least partly cover the source housing and operable to move, axially, rotationally or otherwise, between a position in which the sources are uncovered and a position in which the sources are covered. Such a shuttering arrangement is described in WO00/22387. Alternatively the sources may be provided with a housing having a means to shutter each source individually, optionally operable automatically to open and close a single shutter or more than one shutter, possibly in a pre-determined sequence.

There are practical engineering limits to the precision of collimation (nearness to a non- spreading beam). Simplicity of design will usually lead to accepting a degree of spread in the beam that may result in detectors picking up radiation from more than one source (cross-talk). We have found that cross-talk can be reduced by using more than one array of detectors with detectors in each column being correspondingly more widely spaced and the beams aligned with one array of detectors being radially angularly displaced from those for the or each other detector array(s). More than one array of sources may also be used, but is not preferred. A further benefit from using multiple detector arrays is that where electrically powered detectors are used, the reduction in the number of detectors in each array reduces the power supplied to each, making it easier to comply with safety requirements in when dealing with highly combustible oil/gas systems. One or more of the sources may be provided with collimation for producing and directing more than one beam of radiation to more than one detector, this is particularly useful when more than one array of detectors is used.

The type of detectors used in the apparatus and method is not critical although in practice compact devices will usually be chosen. The detectors may be electrically powered e.g. Geiger-Muller (GM) tubes or scintillation detectors linked with photomultipliers, or unpowered as in simple scintillation devices. Among electrically powered detectors, GM tubes are particularly convenient, because they are electrically and thermally robust and are available in mechanically robust forms. Among unpowered detectors scintillation detectors linked to counters by fibre optic links (optionally with photomultipliers outside the container for the medium under test) are particularly useful. When electrically powered detectors are used and especially when the density profiler is used in a combustion or explosion risk environment, it is desirable that the total electrical energy and power associated with the detectors is sufficiently low as not to be a significant source of ignition in the event of system failure (particularly resulting in direct contact between combustible or explosive materials and any electrically live components). Photomultipliers generally require relatively large amounts of electrical power (as compared with GM tubes) and it is thus preferable to avoid including these as part of the detectors. GM tubes are readily available with physical dimensions of cylinders about 12.5 mm long and about 5 mm in diameter. The resolution may be improved by using smaller devices (GM tubes as short as about 5 mm are available) or by spacing the GM tubes more closely e.g. with their axes arranged perpendicular to the linear axis of the array, or by offsetting their axes and overlapping the cylinders in the direction of the linear axis of the array, although closer spacing may increase the extent of cross-talk. Using commercially available 12.5 mm GM tubes it is practical to fabricate arrays containing up to about 32 detectors, or even up to about 48, whilst restricting the total power in the detector array so that it satisfies the "intrinsically safe" rating for use in combustible or explosive environments as found in oil/gas extraction. Using un-powered scintillation detectors with fibre optic links is even safer as there are no electrical components necessary in the detector array.

The apparatus includes means for analysing the detector output signals to determine the density of the medium traversed by the beams of radiation in passing from a source to a detector. Such means normally comprises a counting device or other such device capable of passing a signal to a data processing means which carries information as to the amount of radiation detected. The counting devices for any of these detectors will usually be electronic and each detector will be associated with a counter which will usually be linked to a device that translates the detection (count) rate to a measure corresponding to density for each detector. Using modern electronics it will usually be practical to provide a counter for each detector, but time division multiplexing of counters can be used although with a resultant increase in the time needed for measurement of a density profile. The counting device or data processing means normally includes a signal processing function capable of applying a smoothing algorithm to the raw signal in order to eliminate signal noise and to help identify significant changes in the signal which may indicate a change in the density of the medium through which the radiation has passed. Such analysis generally includes an averaging function and statistical analysis routines.

The amount of radiation received by a detector is less than the radiation emitted by the source because the radiation is attenuated, e.g. by scattering and reflection, by the materials through which it passes before impinging upon the detector. It is well known that different materials attenuate radiation to a different extent, depending largely upon the density of the material. Therefore, assuming that the source radiation and distance between the source and each detector is identical, a statistically significant difference in the radiation counted by two different detectors at different locations in the array indicates that the material between the source and each detector has different attenuation characteristics and density. By oomparing the radiation monitored by several of the detectors in the detector array and after compensating for any difference in the path length between source and detector, a density profile of the material between the source array and the detector array may be obtained. From such a profile, changes in material density may be identified and correlated to a location within the vessel so that the depth and location of any of the fluid phases present may be calculated.

The output from the analysis means to the user of the apparatus may be in the form of raw data concerning radiation received by detectors disposed at different locations along the array. Such data may be used by a control system to control the contents or flow of material in the vessel or to generate an alarm event in response to the data. Alternatively the output takes the form of a drawing or graph or other visual means to represent the calculated density of the material in the vessel between the source array and the detector array at different positions. Since the user generally requires information concerning changes in the material to indicate boundaries between different materials or phases within the vessel it may not be necessary to calculate an absolute density for the material. If required, density may be calculated by using a calibration for the materials likely to be present in the vessel.

The invention will be further described, by way of example only, with reference to the accompanying drawings which are:
Figure 1, A schematic perspective view of a pipe and apparatus according to the invention; and
Figure 2, A plan view of the arrangement shown in Figure 1.

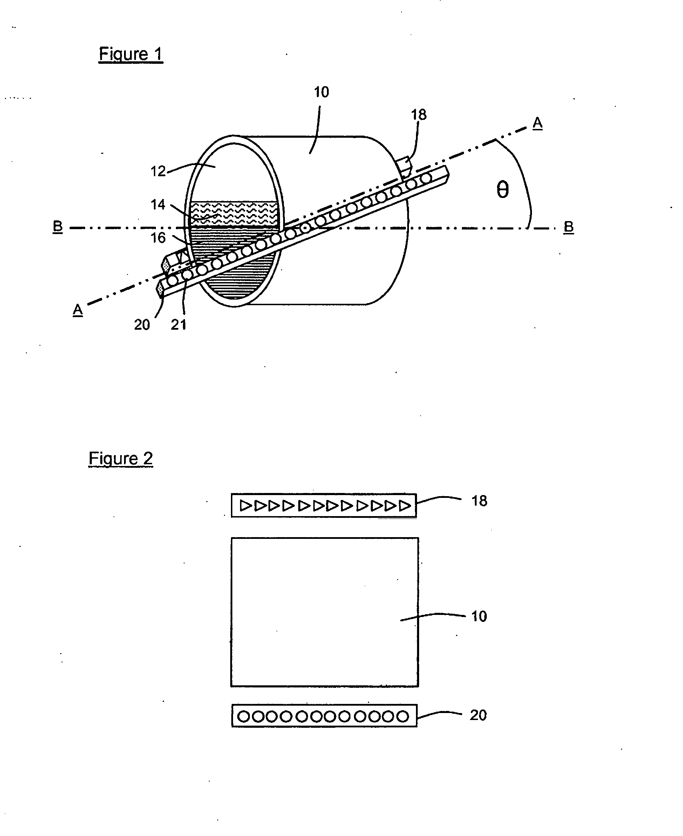

Figures 1 and 2 show a section of a pipeline 10, carrying a fluid comprising a gas phase 12, an organic liquid phase 14 and an aqueous phase 16. The interfacial plane of the fluids is generally horizontal and is indicated by dashed Line B. The apparatus of the invention comprises an array of radiation sources 18 and on the opposite side of the pipeline, an array 20 of radiation detectors 21. The sources and detectors are arranged in a line, the axis of which is indicated by dashed Line A. The source and detector arrays are mounted on either side of the pipeline (mountings omitted from drawings) in such a way that the linear axis of each array forms an angle (θ) with the horizontal fluid interface. Θ is an angle of approximately 20 degrees.

## Claims

1. A method of determining the location of a substantially horizontal fluid interface (B) within a vessel (10), comprising
(i) providing at least one generally linear source array (18) comprising a plurality of sources of penetrating radiation and
(ii) providing at least one generally linear detector array (20) comprising a plurality of radiation detectors (21) capable of detecting radiation emitted by the sources,
said source and detector arrays being located such that radiation emitted from each of the sources is capable of following a linear path from the source, through the vessel and material to at least a respective one of the detectors,
(iii) comparing the amount of radiation received by at least two of the detectors from a respective source to provide an indication of the relative density of the material through which radiation has passed to the detectors,
the method being **characterised in that** the linear axis of the source and detector array (A) is oriented with respect to the horizontal interface such that the linear axis intersects the plane of the interface at an angle between 10 degrees and 80 degrees.

2. A method according to claim 1, wherein more than one source array is provided.

3. A method according to claim 1 or claim 2, wherein more than one detector array is provided.

4. A method according to any one of the preceding claims, wherein each source array comprises a number of sources between 5 and 50 sources.

5. A method according to any one of the preceding claims, wherein each detector array comprises a number of detectors between 10 and 40.

6. A method according to any one of the preceding claims, wherein at least one of the sources is collimated to provide two or more beams of radiation.

7. A method according to any one of the preceding claims wherein said vessel comprises a pipeline.

8. An apparatus for the determination of the location of a substantially horizontal fluid interface (B) within a vessel (10), comprising
(i) at least one generally linear source array (18) comprising a plurality of sources of penetrating radiation and
(ii) at least one generally linear detector array (20) comprising a plurality of radiation detectors (21) capable of detecting radiation emitted by the sources, and
(iii) means for analysing the detector output signals to determine the density of the medium traversed by the beams of radiation in passing from a source to a detector and **characterised in that** said apparatus further comprises:
(iv) means to position the source and a respective detector array such that
(a) radiation emitted from each of the sources is capable of following a linear path from the source, through the vessel and material to at least a respective one of the detectors forming a part of the respective detector array,
and
(b) the linear axis of the source array and the linear axis of its respective detector array (A) are substantially parallel to each other and are oriented with respect to the horizontal interface (B) such that both linear axes intersect the plane of the interface at a common angle between 10 degrees and 80 degrees;

9. An apparatus as claimed in claim 8 wherein said positioning means comprise a support structure.

10. An apparatus as claimed in claim 8 or claim 9, wherein said positioning means is moveable with respect to said vessel.

11. An apparatus according to claim 9 or 10, wherein said support structure incorporates pulleys, wheels, tracks or means to engage with lifting equipment or with an ROV.

## Patentansprüche

1. Verfahren zum Bestimmen der Stelle einer im Wesentlichen horizontalen Fluidgrenzfläche (B) in einem Behälter (10), das folgendes umfasst:
(i) Vorsehen von mindestens einem im Allgemeinen linearen Quell-Array (18), das eine Vielzahl von Quellen eindringender Strahlung enthält und
(ii) Vorsehen von mindestens einem im Allgemeinen linearen Detektor-Array (20), das eine Vielzahl von Strahlungsdetektoren (21) aufweist, die von den Quellen ausgesendete Strahlung detektieren können,
wobei die Quell- und Detektor-Arrays so angeordnet sind, dass die von jeder Quelle ausgesendete Strahlung einem linearen Weg von der Quelle durch den Behälter und das Material hindurch zu mindestens einem jeweiligen der Detektoren folgen kann,
(iii) Vergleichen der Strahlungsmenge, die von mindestens zwei der Detektoren aus einer entsprechenden Quelle erhalten wurde, um einen Hinweis auf die relative Dichte des Materials, durch das Strahlung an die Detektoren gelangt ist, zu liefern,
wobei das Verfahren **dadurch gekennzeichnet** ist, dass die Linearachse des Quell- und des Detektor-Arrays (A) in Bezug auf die horizontale Grenzfläche so ausgerichtet ist, dass die Linearachse die Ebene der Grenzfläche unter einem Winkel zwischen 10 Grad und 80 Grad schneidet.

2. Verfahren gemäß Anspruch 1, wobei mehr als ein Quell-Array vorgesehen ist.

3. Verfahren gemäß Anspruch 1 oder Anspruch 2, wobei mehr als ein Detektor-Array vorgesehen ist.

4. Verfahren gemäß einem der vorhergehenden Ansprüche, wobei jedes Quell-Array eine Anzahl von Quellen zwischen 5 und 50 aufweist.

5. Verfahren gemäß einem der vorhergehenden Ansprüche, wobei jedes Detektor-Array eine Anzahl von Detektoren zwischen 10 und 40 aufweist.

6. Verfahren gemäß einem der vorhergehenden Ansprüche, wobei mindestens eine der Quellen kollimiert wird, um zwei oder mehr Strahlenbündel vorzusehen.

7. Verfahren gemäß einem der vorhergehenden Ansprüche, wobei der Behälter eine Rohrleitung aufweist.

8. Vorrichtung zu Bestimmen der Stelle einer im Wesentlichen horizontalen Fluidgrenzfläche (B) in einem Behälter (10), die folgendes aufweist:
(i) mindestens ein im Wesentlichen lineares Quell-Array (18), das eine Vielzahl von Quellen eindringender Strahlung enthält, und
(ii) mindestens ein im Allgemeinen lineares Detektor-Array (20), das eine Vielzahl von Strahlungsdetektoren (21) aufweist, die von den Quellen ausgesendete Strahlung detektieren können, und
(iii) Mittel zum Analysieren der Detektor-Ausgangssignale, um die Dichte des Mediums zu bestimmen, das von den Strahlenbündeln beim Zurücklegen der Strecke von einer Quelle zu einem Detektor durchquert wird, und **dadurch gekennzeichnet, dass** die Vorrichtung darüber hinaus folgendes aufweist:
(iv) Mittel zum Positionieren der Quelle und eines entsprechenden Detektor-Arrays derart, dass
(a) die von jeder der Quellen ausgesendete Strahlung einem linearen Weg von der Quelle durch den Behälter und das Material hindurch zu mindestens einem jeweiligen der Detektoren, die einen Teil des jeweiligen Detektor-Arrays bilden, folgen kann,
und
(b) die Linearachse des Quell-Arrays und die Linearachse des jeweiligen Detektor-Arrays (A) im Wesentlichen parallel zueinander sind und im Hinblick auf die horizontale Grenzfläche (B) so ausgerichtet sind, dass beide Linearachsen die Ebene der Grenzfläche unter einem gemeinsamen Winkel zwischen 10 Grad und 80 Grad schneiden.

9. Vorrichtung gemäß Anspruch 8, wobei die Positioniermittel eine Tragestruktur aufweisen.

10. Vorrichtung gemäß Anspruch 8 oder Anspruch 9, wobei sich die Positioniermittel bezüglich des Behälters bewegen lassen.

11. Vorrichtung gemäß Anspruch 9 oder 10, wobei die Tragestruktur Riemenscheiben, Räder, Schienen oder Mittel zum Eingriff in Hebezeug oder in ein ROV aufweist.

## Revendications

1. Procédé de détermination de la localisation d'une interface fluidique (B) sensiblement horizontale à l'intérieur d'un récipient (10), comprenant
(i) la prévision d'au moins un réseau (18) de sources généralement linéaire comprenant une pluralité de sources de rayonnement pénétrant et
(ii) la prévision d'au moins un réseau (20) de détecteurs généralement linéaire comprenant une pluralité de détecteurs (21) de rayonnement aptes à détecter un rayonnement émis par les sources,
lesdits réseaux de sources et de détecteurs étant situés de telle manière qu'un rayonnement émis de chacune des sources est apte à suivre un chemin linéaire à partir de la source, à travers le récipient et la matière jusqu'à au moins un respectif des détecteurs,
(iii) la comparaison de la quantité de rayonnement reçue par au moins deux des détecteurs provenant d'une source respective pour donner une indication de la densité relative de la matière à travers laquelle un rayonnement est passé jusqu'aux détecteurs,
le procédé étant **caractérisé en ce que** l'axe linéaire de la source et du réseau de détecteurs (A) est orienté par rapport à l'interface horizontale de telle manière que l'axe linéaire coupe le plan de l'interface à un angle entre 10 degrés et 80 degrés.

2. Procédé selon la revendication 1, dans lequel plus d'un réseau de sources est prévu.

3. Procédé selon la revendication 1 ou la revendication 2, dans lequel plus d'un réseau de détecteurs est prévu.

4. Procédé selon l'une quelconque des revendications précédentes, dans lequel chaque réseau de sources comprend un nombre de sources entre 5 et 50 sources.

5. Procédé selon l'une quelconque des revendications précédentes, dans lequel chaque réseau de détecteurs comprend un nombre de détecteurs entre 10 et 40 détecteurs.

6. Procédé selon l'une quelconque des revendications précédentes, dans lequel au moins une des sources est collimatée pour donner deux faisceaux ou plus de rayonnement.

7. Procédé selon l'une quelconque des revendications précédentes, dans lequel ledit récipient comprend une canalisation.

8. Appareil pour la détermination de la localisation d'une interface fluidique (B) sensiblement horizontale à l'intérieur d'un récipient (10), comprenant
(i) au moins un réseau (18) de sources généralement linéaire comprenant une pluralité de sources de rayonnement pénétrant et
(ii) au moins un réseau (20) de détecteurs généralement linéaire comprenant une pluralité de détecteurs (21) de rayonnement aptes à détecter un rayonnement émis par les sources, et
(iii) un moyen pour analyser les signaux de sortie de détecteurs pour déterminer la densité du milieu traversé par les faisceaux de rayonnement au passage d'une source à un détecteur
et **caractérisé en ce que** ledit appareil comprend en outre :
(iv) un moyen pour positionner la source et un réseau respectif de détecteurs de telle manière que
(a) un rayonnement émis de chacune des sources est apte à suivre un chemin linéaire à partir de la source, à travers le récipient et la matière jusqu'à au moins un respectif des détecteurs formant une partie du réseau respectif de détecteurs,
et
(b) l'axe linéaire du réseau de sources et l'axe linéaire de son réseau respectif de détecteurs (A) sont sensiblement parallèles l'un à l'autre et sont orientés par rapport à l'interface horizontale (B) de telle manière que les deux axes linéaires coupent le plan de l'interface à un angle commun entre 10 degrés et 80 degrés.

9. Appareil selon la revendication 8 dans lequel ledit moyen de positionnement comprend une structure support.

10. Appareil selon la revendication 8 ou la revendication 9, dans lequel ledit moyen de positionnement est mobile par rapport audit récipient.

11. Appareil selon la revendication 9 ou 10, dans lequel ladite structure support incorpore des poulies, des roues, des chenilles ou des moyens pour un engagement avec un équipement de levage ou avec un ROV.
